# EUROPÄISCHE PATENTSCHRIFT

(11) **EP 3 213 941 B1**
(45) Veröffentlichungstag und Bekanntmachung des Hinweises auf die Patenterteilung: **01.05.2019**
(21) Anmeldenummer: 16158304.2
(22) Anmeldetag: 02.03.2016
(51) Int. Cl.: B60G 17/005, E02F 9/22

(54) **VORRICHTUNG ZUR ANSTEUERUNG EINER PENDELACHSE, PENDELACHSBAUGRUPPE SOWIE MOBILE ARBEITSMASCHINE MIT ZUMINDEST EINER PENDELACHSE**
DEVICE FOR CONTROLLING A PENDULUM AXLE, PENDULUM ASSEMBLY AND MOBILE WORKING MACHINE WITH AT LEAST ONE PENDULUM AXLE
DISPOSITIF DE COMMANDE D'UN ARBRE OSCILLANT, BLOC D'ARBRE OSCILLANT ET MACHINE DE TRAVAIL MOBILE COMPRENANT AU MOINS UN ARBRE OSCILLANT

(43) Veröffentlichungstag der Anmeldung: 06.09.2017
(73) Patentinhaber: Bucher Hydraulics Erding GmbH, 85435 Erding (DE)
(72) Erfinder: SCHREFF, Alois, 84439 Steinkirchen (DE)
(74) Vertreter: Witte, Weller & Partner Patentanwälte mbB

(56) Entgegenhaltungen:
- WO-A1-90/05815
- DE-T2- 60 312 462
- FR-A1- 2 681 563
- JP-A- H0 930 229
- US-B1- 6 308 973

## Beschreibung

Die vorliegende Offenbarung betrifft eine Vorrichtung zur Ansteuerung einer Pendelachse einer mobilen Arbeitsmaschine, die einen ersten Zylinder und einen zweiten Zylinder aufweist, die jeweils einer Seite einer Pendelachse zugeordnet sind, wobei ferner ein erstes Steuerventil, das dem ersten Zylinder zugeordnet ist, und ein zweites Steuerventil, das dem zweiten Zylinder zugeordnet ist, vorgesehen sind.

Die Offenbarung betrifft ferner eine Pendelachsbaugruppe mit einer derartigen Vorrichtung, die insbesondere als Blockiervorrichtung oder Arretiervorrichtung ausgestaltet ist, sowie eine mobile Arbeitsmaschine mit zumindest einer derartigen Pendelachse.

Mobile Arbeitsmaschinen können etwa Baumaschinen, landwirtschaftliche sowie forstwirtschaftliche Nutzfahrzeuge umfassen. Beispielhaft kann es sich um Radlader, Bagger, Traktoren, allgemein um Zugfahrzeuge sowie um Anhänger handeln. Mobile Arbeitsmaschinen können grundsätzlich mit einem eigenen Fahrantrieb versehen sein. Es sind auch Ausgestaltungen mobiler Arbeitsmaschinen denkbar, die keinen eigenen Fahrantrieb aufweisen.

Pendelachsen erlauben eine deutliche Verschränkung zwischen einem Achskörper sowie einem Fahrgestell der mobilen Arbeitsmaschine. Auf diese Weise ist eine gute Geländegängigkeit bzw. Manövrierbarkeit gewährleistet. Ferner wird der Einsatz der mobilen Arbeitsmaschine auf weichem Untergrund, wie etwa auf schlammigem oder sandigem Untergrund, vereinfacht. Im Sinne dieser Offenbarung kann unter einem Fahrgestell allgemein ein rahmenartiges Gestell verstanden werden, das einen Aufbau trägt. Ein Fahrgestell kann jedoch auch Teil eines selbsttragenden Aufbaus sein.

Es sind jedoch Anwendungsfälle bekannt, bei denen es gewünscht ist, zumindest eine oder sämtliche Pendelachsen der mobilen Arbeitsmaschine zu blockieren, so dass kein Pendeln oder Verschwenken des Achskörpers relativ zum Fahrgestell ermöglicht ist. Dies kann auch eine zumindest deutlich spürbare Einschränkung der Verschwenkbarkeit bzw. eines Verschwenkwinkels beinhalten. Beispielhaft kann beim Fahren auf öffentlichen Straßen bzw. allgemein auf festem, ebenem Untergrund ein Blockieren der Pendelachsen erwünscht sein.

Aus der US 6,308,973 B1 ist ein Federungssystem für ein mobiles Arbeitsgerät bekannt, mit einer Achse, einer hydraulischen Druckquelle, die einen Betriebshydraulikölstrom bereitstellt, einem Paar hydraulischer Stützzylinder, die jeweils einer Seite der Achse zugeordnet sind, wobei die hydraulische Druckquelle mit den Stützzylindern über Fluidleitungen verbindbar ist, wobei Ventile zum Sperren eines Fluidflusses vorgesehen sind, wobei die Ventile hydraulisch schaltbar sind.

Die DE 603 12 462 T2 offenbart ein Radfahrzeug mit einem oberen Fahrgestell und einem unteren Fahrgestell, mit einer schwenkbaren Achse, die mit dem unteren Fahrgestell gekoppelt ist, einer Blockiereinrichtung zwischen dem unteren Fahrgestell und der Achse zum Sperren der Schwenklager der Achse relativ zum unteren Fahrgestell, und mit einer Steuereinrichtung zum Aktivieren der Blockiereinrichtung, die eine Sensoreinrichtung zur Erfassung eines Fahrzeugzustands aufweist.

Aus der WO 90/05815 A1 ist ein mobiles Arbeitsgerät bekannt, mit einer Pendelachse, mit einer hydraulischen Stabilisierungsvorrichtung zur Schwingungsdämpfung, und mit einer Steuereinrichtung zur Steuerung der Stabilisierungsvorrichtung. Die Stabilisierungsvorrichtung ist mit hydraulisch ansteuerbaren Zylindern versehen.

Die JP H09 30229 A offenbart ein mobiles Arbeitsgerät mit einer gefederten Achse, die über zwei Zylinder mit einem Fahrgestell relativ zu diesem beweglich verbunden ist, mit Sensoren zur Lasterfassung, die an die Zylinder angeschlossen sind, und mit einer Steuereinrichtung, die Ventile zu Ansteuerung der Zylinder in Abhängigkeit von Sensorsignalen betätigt.

Aus der EP 1 449 686 A2 ist eine Verriegelungsvorrichtung für eine Fahrzeugpendelachse bekannt. Die EP 1 449 686 A2 beschreibt eine Fahreinheit für Fahrzeuge, mit einem Fahrgestell, an dem zumindest eine Pendelachse gelenkig aufgenommen ist, wobei am Fahrgestell zumindest ein Hydraulikzylinder mit verfahrbarer Kolbenstange vorgesehen ist, wobei über die Kolbenstange eine Kraft auf eine Auflagefläche der Pendelachse aufbringbar ist, um die Pendelachse in einer gewünschten Lage zu stützen. Vorzugsweise sind zwei derartige Hydraulikzylinder an einander abgewandten Enden der Pendelachse aufgenommen, um diese selektiv zu verriegeln bzw. zu blockieren.

Im Sinne dieser Offenbarung bezieht sich der Begriff blockieren nicht auf ein Abbremsen oder Sperren von Rädern der Pendelachse. Vielmehr geht es um ein Blockieren oder Verriegeln einer Schwenkbewegung der Pendelachse relativ zum Fahrgestell.

Mit anderen Worten kann die Pendelachse bzw. kann deren Achskörper hydraulisch blockiert werden. Häufig weisen mobile Arbeitsmaschinen, etwa Mobilbagger, Radlader, Traktoren oder dergleichen, eine integrierte Bordhydraulik auf, die auch einen Druckerzeuger umfassen kann. Es können diverse Kreisläufe bzw. Pfade vorgesehen sein, um verschiedene Funktionen der mobilen Arbeitsmaschine bereitzustellen. Dies kann einen Fahrantrieb der Arbeitsmaschine sowie Zusatzfunktionen betreffen, etwa Hebefunktionen, Schwenkfunktionen, Zugfunktionen, Hilfsantriebe, Zapfwellenantriebe oder dergleichen.

Achskörper der Pendelachsen sind üblicherweise beabstandet von Zentralelementen der Bordhydraulik angeordnet. Dies bedingt einen gewissen Aufwand für die Implementierung und insbesondere die Ankopplung bzw. Ansteuerung der Verriegelungsvorrichtungen oder Blockiervorrichtungen für diese Pendelachsen. Ferner sind gerade die Achskörper der Pendelachsen mobiler Arbeitsmaschinen häufig direkt den Umgebungsbedingungen ausgesetzt. Die Achskörper neigen zu Verschmutzungen und Anhaftungen. Dies kann auch das hydraulische System zur Steuerung der Verriegelung bzw. des Blockierens betreffen.

Herkömmliche Systeme können demgemäß zumindest einige Nachteile betreffend die Funktionssicherheit und Verlässlichkeit aufweisen. Allgemein ist der Aufwand zur hydraulischen Ankopplung groß. Viele Systeme erfordern separate Druckleitungen für jeden der zwei Zylinder. Darüber hinaus ist selbst im gesperrten Zustand der Pendelachse aufgrund der nicht unerheblichen Ölmenge eine gewisse Kompressibilität gegeben, die zu einer Nachgiebigkeit der Blockierzylinder und damit der Pendelachse führen kann. Dies kann sich in einem Restspiel der Pendelachse im gesperrten Zustand niederschlagen.

Vor diesem Hintergrund liegt der Offenbarung die Aufgabe zugrunde, eine Pendelachsbaugruppe mit einer Pendelachse und einer verbesserten Vorrichtung zur Ansteuerung der Pendelachse anzugeben, insbesondere zum selektiven Blockieren oder Verriegeln des Achskörpers der Pendelachse, die zumindest einige der vorbeschriebenen Nachteile überwindet. Insbesondere soll die Vorrichtung mit geringem Aufwand implementierbar sein. Im blockierten Zustand soll die Pendelachse möglichst starr und möglichst spielfrei gesperrt sein. Darüber hinaus soll das Regelverhalten bzw. Steuerverhalten der Vorrichtung optimiert werden. Schließlich soll möglichst der Energieaufwand für das Betreiben der Vorrichtung reduziert werden. Ferner soll die Vorrichtung möglichst robust und unempfindlich gegenüber Umwelteinflüssen sein.

Die Pendelachsbaugruppe betreffend wird die Aufgabe durch eine Pendelachsbaugruppe für eine mobile Arbeitsmaschine gelöst, mit einer Pendelachse und einer Blockiervorrichtung zum selektiven Betreiben der Pendelachse in einem Sperrzustand und einem Pendelzustand, wobei die Blockiervorrichtung eine Zylinderanordnung zur Aufnahme zwischen der Pendelachse und einem Gestell der Arbeitsmaschine, die eine erste Hubkammer und eine zweite Hubkammer aufweist, insbesondere einen ersten Zylinder und einen zweiten Zylinder, die jeweils einer Seite einer Pendelachse zugeordnet sind, ein erstes Steuerventil, das der ersten Hubkammer zugeordnet ist, ein zweites Steuerventil, das der zweiten Hubkammer zugeordnet ist, eine Fluidleitung, die die erste Hubkammer und die zweite Hubkammer, insbesondere den ersten Zylinder und den zweiten Zylinder, miteinander verbindet, und eine Steuereinrichtung aufweist, die zur Ansteuerung mit dem ersten Steuerventil und dem zweiten Steuerventil elektrisch verbindbar ist, wobei die Zylinderanordnung, die Steuerventile und die Fluidleitung ein in sich geschlossenes druckerzeugerloses hydraulisches System bilden, wobei die Steuerventile über die Steuereinrichtung aktivierbar sind, um die Pendelachse zu blockieren oder freizugeben, wobei die Blockiervorrichtung hydraulisch autark gestaltet ist, und wobei das erste Steuerventil und das zweite Steuerventil direkt elektrisch ansteuerbar sind.

Die Aufgabe der Erfindung wird auf diese Weise vollkommen gelöst.

Erfindungsgemäß erlaubt nämlich die Blockiervorrichtung ein elektrisches Aktivieren der Steuerventile und somit eine Betätigung der Blockiervorrichtung auf Basis elektrischer Signale. Mit anderen Worten ist keine hydraulische Verbindung zur sonstigen Bordhydraulik der mobilen Arbeitsmaschine erforderlich. Dies hat den Vorteil, dass der Installationsaufwand deutlich reduzierbar ist. Ferner erlaubt die elektrische Ansteuerung eine zuverlässige Funktion. Die Vorrichtung ist autark, zumindest was den hydraulischen Teil betrifft. Die Steuerventile sind schaltbar, um den ersten Zylinder bzw. den zweiten Zylinder kontrolliert auszufahren. Elektrische Steuersignale können kabelgebunden oder kabellos (per Funk) übertragen werden.

Grundsätzlich kann die Vorrichtung mit einer geringen Menge eines Hydraulikfluids betrieben werden, da keine langen Verbindungsleitungen zu einer Primärhydraulik der Arbeitsmaschine erforderlich sind.

Die Zylinder können als einfachwirkende Zylinder ausgestaltet sein. Mit anderen Worten kann etwa ein Einfahren der Zylinder über die Pendelachse selbst bewirkt werden, sofern die Steuerventile einen entsprechenden Rückfluss gestatten.

Demgemäß betrifft eine weitere Ausgestaltung der vorliegenden Offenbarung eine Pendelachsbaugruppe mit einer Blockiervorrichtung zur Ansteuerung einer Pendelachse einer mobilen Arbeitsmaschine, die einen ersten Zylinder und einen zweiten Zylinder, die jeweils einer Seite einer Pendelachse zugeordnet sind, ein erstes Steuerventil, das dem ersten Zylinder zugeordnet ist, ein zweites Steuerventil, das dem zweiten Zylinder zugeordnet ist, eine Fluidleitung, die den ersten Zylinder und den zweiten Zylinder miteinander verbindet, und eine Steuereinrichtung aufweist, die zur Ansteuerung, insbesondere zur elektrischen Ansteuerung, mit dem ersten Steuerventil und dem zweiten Steuerventil verbindbar ist, wobei die Zylinder, die Steuerventile und die Fluidleitung ein in sich geschlossenes hydraulisches System bilden, und wobei die Steuerventile über die Steuereinrichtung aktivierbar sind, um die Pendelachse zu blockieren oder freizugeben.

Gemäß alternativen Ausgestaltungen ist jedoch auch die Verwendung eines einzigen Zylinders vorstellbar, der vorzugsweise die zwei Hubkammern aufweist. Somit müssen nicht unbedingt zwei separate Zylinder vorgesehen sein, die voneinander beabstandet jeweils einer der beiden Seiten (z.B. rechts oder linkes) der Pendelachse zugeordnet sind. Stattdessen können die erste Hubkammer und die zweite Hubkammer in diesen Zylinder integriert sein, der sich zwischen einem Unterwagen (Gestell) und einer Achse (Pendelachse) der mobilen Arbeitsmaschine erstreckt. Ein solcher Zylinder kann etwa als doppeltwirkender Zylinder, insbesondere als Gleichlaufzylinder gestaltet sein. Auch auf diese Weise kann eine Pendelachsblockierung bewirkt werden.

Es ist auch vorstellbar, zwei doppeltwirkende Zylinder zu verwenden, die die erste Hubkammer und die zweite Hubkammer ausbilden.

Gemäß einer beispielhaften Ausgestaltung ist die Blockiervorrichtung als elektrohydraulische Blockiervorrichtung für eine Pendelachse einer mobilen Arbeitsmaschine, insbesondere eines Nutzfahrzeugs, einer Baumaschine oder einer Landmaschine, ausgestaltet. Die Blockiervorrichtung kann auch als Arretiervorrichtung bezeichnet werden.

Erfindungsgemäß erfolgt die Ansteuerung elektrisch. Dies kann auch eine elektronische Ansteuerung umfassen.

Erfindungsgemäß ist die Steuereinrichtung als nicht-hydraulische, elektrische Steuereinrichtung ausgebildet und über elektrische Steuerleitungen mit dem ersten Steuerventil und dem zweiten Steuerventil verbindbar, insbesondere mit Aktoren des ersten Steuerventils und des zweiten Steuerventils. Mit anderen Worten kann die hydraulische Anordnung, umfassend den ersten Zylinder und den zweiten Zylinder, die über das erste Steuerventil und das zweite Steuerventil angesteuert werden, über eine (übergeordnete) nicht-hydraulische, elektrische Steuereinrichtung angesteuert werden, die auf die Steuerventile einwirkt. Bei den Aktoren kann es sich etwa um elektromagnetische Aktoren handeln. Die Aktoren können mit einer geeigneten Rückstellung, etwa mit einer mechanischen Rückstellung durch Rückstellfedern gekoppelt sein. Gleichwohl sind auch doppeltwirkende Aktoren vorstellbar.

Insgesamt erlaubt die elektrische Kopplung der Steuereinrichtung mit den Aktoren eine weitere Minimierung des Installationsaufwands, insbesondere für die hydraulischen Leitungen.

Die Blockiervorrichtung ist hydraulisch autark gestaltet. Ferner sind gemäß einer weiteren beispielhaften Ausgestaltung die Aktoren des ersten Steuerventils und des zweiten Steuerventils direkt elektrisch ansteuerbar. Im Sinne der vorliegenden Offenbarung ist unter dem Begriff hydraulisch autark ein Zustand der Blockiervorrichtung zu verstehen, der keine Ankopplung an eine Bordhydraulik der Arbeitsmaschine erforderlich macht. Die Blockiervorrichtung steht nicht in hydraulischer Wirkverbindung mit der Bordhydraulik der Arbeitsmaschine.

Gemäß einer weiteren Ausgestaltung ist zumindest ein Ventil des ersten Steuerventils oder des zweiten Steuerventils als Wegeventil, insbesondere als 2/2-Wegeventil, vorzugsweise als 2/2-Wege-Sitzventil ausgeführt. Die Ausführung als Sitzventil erlaubt eine gute Abdichtung der einzelnen Schaltstellungen, insbesondere im Hinblick auf diejenige Stellung, die dem Blockierzustand der Pendelachse zugeordnet ist.

Die Steuerventile können auch als Nachsaugventile ausgeführt sein. Ein 2/2-Wegeventil weist zwei Anschlüsse und zwei Schaltstellungen auf. Es ist vorstellbar, ein Wegeventil mit einer integrierten Rückschlagstellung zu verwenden. Es ist jedoch auch vorstellbar, ein Wegeventil zu verwenden, das mit einem separaten Rückschlagventil gekoppelt ist.

Vorzugsweise sind das erste Steuerventil und das zweite Steuerventil parallel (gleichzeitig) schaltbar. Dies kann grundsätzlich Ausgestaltungen umfassen, die einen einzigen Aktor für die Steuerventile vorsehen. Gleichwohl sind auch Ausgestaltungen umfasst, bei denen jedes Steuerventil mit einem eigenen Aktor gekoppelt ist, wobei die Aktoren zeitgleich (synchron) ansteuerbar sind. Dies kann den Aufwand zur Ansteuerung verringern.

Eingangsseitig sind die Steuerventile über die Fluidleitung miteinander verbunden. Ausgangsseitig ist jedes der Steuerventile mit einem Zylinderraum bzw. einer Hubkammer des zugeordneten Zylinders verbunden. Es versteht sich, dass die Bezeichnungen eingangsseitiger Anschluss und ausgangsseitiger Anschluss vorrangig zur Veranschaulichung genutzt werden. Stattdessen sind auch Bezeichnungen wie erster Anschluss und zweiter Anschluss vorstellbar.

Vorzugsweise sind die Steuerventile in einem bestromten Zustand in einer Durchlassstellung, in der die Hubkammern der Zylinder fluidisch über die Fluidleitung miteinander gekoppelt sind. Im unbestromten bzw. stromlosen Zustand befinden sich beide Ventile vorzugsweise in einer Schließstellung bzw. Rückschlagstellung, in der ein Durchlass des Fluids in Richtung auf die jeweilige Hubkammer des Zylinders gestattet ist. Jedoch ist der umgekehrte Weg, ausgehend von der Hubkammer in Richtung auf die Fluidleitung, gesperrt.

Es sind auch Ausgestaltungen vorstellbar, bei denen für die Blockiervorrichtung ein zentraler Steuerblock vorgesehen ist, der die Funktion der Steuerventile ausübt. Gleichwohl ist es bevorzugt, die Steuerventile jeweils sehr nah bzw. in unmittelbarer Nachbarschaft der ihnen zugeordneten Zylinder anzuordnen, insbesondere die Steuerventile in die Zylinder zu integrieren.

Gemäß einer weiteren Ausgestaltung der Blockiervorrichtung ist die Steuereinrichtung dazu ausgebildet, das erste Steuerventil und das zweite Steuerventil gleichzeitig in einer ersten Schaltstellung oder einer zweiten Schaltstellung zu betreiben. Wie vorstehend bereits erwähnt, betrifft die erste Schaltstellung beispielhaft einen Durchfluss in beide Richtungen. Die zweite Schaltstellung betrifft beispielhaft eine Rückschlagfunktion, in der jeweils nur ein Durchfluss in Richtung auf die dem Steuerventil zugeordnete Hubkammer gestattet ist.

Gemäß einer weiteren Ausgestaltung umfasst die die Zylinderanordnung einen ersten Zylinder, umfassend die erste Hubkammer, und einen zweiten Zylinder, umfassend die zweite Hubkammer, die jeweils an einer Seite der Pendelachse angeordnet sind, und wobei der erste Zylinder und der zweite Zylinder als einfachwirkende Zylinder ausgestaltet sind. Mit anderen Worten kann die Pendelachse selbst bzw. deren Achskörper die Rückstellung der Zylinder bewirken. Kolben der Zylinder können auch als Tauchkolben oder Plungerkolben bezeichnet werden.

Alternativ ist es vorstellbar, einen doppeltwirkenden Zylinder zu verwenden, der die erste Hubkammer und die zweite Hubkammer umfasst.

Gemäß einer weiteren Ausgestaltung umfasst die Blockiervorrichtung ferner einen Druckspeicher, der an die Fluidleitung ankoppelt. Bei dem Druckspeicher kann es sich insbesondere um einen Permanent-Druckspeicher handeln. Beispielhaft ist der Druckspeicher dazu ausgebildet, einen Nenn-Druck im hydraulischen System der Blockiervorrichtung im Bereich von ca. 30 bar bereitzustellen. Der Druckspeicher sorgt für eine weitere Erhöhung der Funktionssicherheit. Der Druckspeicher kann etwaige Druckschwankungen im hydraulischen System der Blockiervorrichtung ausgleichen. Ferner kann der Druckspeicher etwaige Druckmittelverluste oder Fluidverluste ausgleichen. Der Druckspeicher dient gewissermaßen als "Antrieb" bzw. "Motor" der Zylinder, um diese auszufahren. Somit ist gewährleistet, dass die Kolben der Zylinder sicher auf dem Achskörper der Pendelachse aufliegen.

Gemäß einer alternativen Ausgestaltung ist die Fluidleitung mit einer vorgespannten (unter Druck stehenden) Leitung im Unterwagen der mobilen Arbeitsmaschine verbunden. Beispielhaft kann eine Kopplung mit einer Leckölleitung eines Fahrantriebs am Unterwagen erfolgen. Auch auf diese Weise kann eine Vorspannung gewährleistet werden. Ferner ist es vorstellbar, einen Niederdruckkreis im Unterwagen an die Fluidleitung anzukoppeln, um die Vorspannung zu gewährleisten. Wesentlich ist, dass die Kopplung primär nicht zu Zwecken der Steuerung oder Energieübertragung erfolgt, sondern vorrangig zur Aufrechterhaltung der gewünschten Vorspannung im hydraulischen System der Blockiervorrichtung.

Im Sperrzustand bzw. in der Sperrstellung, in der ein Einfahren der Kolben der Zylinder unterbunden ist, sind die Zylinder, insbesondere deren Kolben, grundsätzlich mit dem Druck vorgespannt, den der Druckspeicher bereitstellt. Da jedoch die Steuerventile in der Sperrstellung nach Art eines Rückschlagventils betrieben werden, kann der Achskörper der Pendelachse die Kolben nicht einfahren. Somit kann lediglich ein Ausfahren der Kolben erfolgen. Der erforderliche Druck wird durch das Reservoir bereitgestellt. Im Sperrzustand (Sperrstellung) wirkt sich nur die Kompressibilität des Fluids, das in den Hubkammern der Zylinder "eingesperrt" ist, steifigkeitsmindernd aus. Da die Steuerventile in der Sperrstellung nach Art eines Rückschlagventils agieren, hat die Kompressibilität des Fluids in der Steuerleitung bzw. im Druckspeicher keine Auswirkung auf die Steifigkeit der Pendelachse im Sperrzustand.

Vorzugsweise ist der Druckspeicher zum Druckausgleich permanent hydraulisch mit der Fluidleitung gekoppelt. Mit anderen Worten ist es nicht erforderlich, zwischen dem Druckspeicher und der Fluidleitung, die die Steuerventile miteinander verbindet, ein weiteres Ventil vorzusehen, das im Betrieb der Blockiervorrichtung geöffnet oder geschlossen wird. Der Druckspeicher ist ein operativer Bestandteil der Blockiervorrichtung.

Gemäß einer weiteren Ausgestaltung der Blockiervorrichtung weist der Druckspeicher eine initiale Vorspannung auf, wobei vorzugsweise ein Kontrollanschluss vorgesehen ist, über den bedarfsweise eine Druckmessung oder eine Nachbefüllung erfolgt.

Grundsätzlich ist also beim Druckspeicher eine Dauerbefüllung vorstellbar. Im Normalbetrieb bzw. bei normaler Lebensdauer und/oder normalem Verschleiß ist es nicht unbedingt erforderlich, den Druckspeicher erneut unter Druck zu setzen bzw. den Druck/die Fluidmenge im Druckspeicher zu erhöhen. Mit anderen Worten benötigt die Blockiervorrichtung, jedenfalls in einem normalen Betriebszustand, keinen separaten (aktiven) Druckerzeuger, wie etwa eine Pumpe oder dergleichen. Die Blockiervorrichtung kann auch als druckerzeugerlose Blockiervorrichtung bezeichnet werden. Das hydraulische System der Blockiervorrichtung kann auch als druckerzeugerloses System beschrieben werden. Der Druckspeicher dient als Puffer.

Die Energie, die zum Einfahren der Kolben der Zylinder erforderlich ist, wird durch die Pendelachse selbst aufgebracht. Die initiale Vorspannung kann etwa durch eine Erstbefüllung des Druckspeichers bewirkt werden. Demgemäß kann die initiale Vorspannung auch als werkseitige Vorspannung bezeichnet werden.

Der Kontrollanschluss kann auch als Messanschluss bezeichnet werden. Es versteht sich, dass der Kontrollanschluss, zumindest gemäß einigen Ausführungsbeispielen, im Normalbetrieb nicht genutzt wird. Sofern jedoch etwa eine Undichtigkeit im System besteht und es zu Druckmittelverlust kommt, kann über den Kontrollanschluss eine Nachbefüllung erfolgen.

Gemäß einer weiteren Ausgestaltung der Blockiervorrichtung sind die erste Hubkammer und die zweite Hubkammer in einem Pendelzustand der Pendelachse hydraulisch miteinander gekoppelt. Das Fluid (Hydrauliköl) kann zwischen den beiden Hubkammern hin und her strömen, wenn die Pendelachse verschwenkt wird. Die Hubkammern der Zylinder definieren den jeweiligen Hubraum. Wenn die Pendelachse, insbesondere deren Achskörper, relativ zum Fahrgestell pendelt oder verschwenkt wird, wird jeweils einer der beiden Zylinder eingefahren und der andere ausgefahren. Demgemäß wird das Fluid zwischen den Hubkammern hin und her geschoben. Vorteilhaft sorgt der Druckspeicher dafür, dass der Nenn-Druck (etwa 30 bar) im System bestehen bleibt. Somit kann stets eine sichere Anlage der Kolben am Achskörper gewährleistet sein.

In diesem Zusammenhang ist anzumerken, dass ein der Hubkammer abgewandtes Ende des ersten Zylinders bzw. des zweiten Zylinders nicht zwingend mechanisch fest mit dem Achskörper der Pendelachse gekoppelt ist. Stattdessen ist es bevorzugt, wenn der Achskörper und die Stirnfläche des Kolbens gegeneinander gedrückt oder gepresst werden.

Gemäß einer Weiterbildung der obigen Ausgestaltung sind, in einem Blockierzustand der Pendelachse, das erste Steuerventil in Richtung auf die erste Hubkammer und das zweite Steuerventil in Richtung auf die zweite Hubkammer geöffnet und entgegen der Öffnungsrichtung gesperrt. Somit können die Kolben schnell ausgefahren bzw. "aufgepumpt" werden. Beispielhaft kann sich auf diese Weise, in einer beliebigen Schrägstellung der Pendelachse, schon nach einem einmaligen Lastwechsel ein Gleichgewichtszustand ergeben, in dem die Pendelachse nicht weiter verschwenkbar ist. Die Pendelachse ist dann in dieser Stellung, die auch eine geneigte Stellung oder Schrägstellung umfassen kann, gesperrt.

So können bereits wenige (vorzugsweise 1 oder 2) Lastwechsel ausreichen, um die Pendelachse fest zu blockieren. Beispielsweise wird bei einer Belastung eines der beiden Zylinder durch dessen kompressible Fluidsäule (Ölsäule) der zweite Zylinder über das Rückschlagventil (in Durchflussrichtung) entsprechend nachgeladen bzw. nachgespannt. Bei Entlastung kann sich die vorgespannte Fluidsäule aufgrund der mechanischen Kopplung (Pendelachse, gelenkige Lagerung, Zylinder und Unterwagen) nicht mehr komplett dekomprimieren. Dies kann in einer deutlich erhöhten Vorspannung in beiden abgesperrten Zylindern resultieren. Die Vorspannung kann ein Vielfaches der durch den Druckspeicher bereitgestellten Vorspannung betragen. Dies führt zu einer sehr starren Abstützung und einer im Blockierfall stabil gesperrten Pendelachse.

Die Pendelachsbaugruppe weist eine Blockiervorrichtung gemäß zumindest einem der hierin genannten Aspekte auf, die zum selektiven Betreiben der Pendelachse in einem Sperrzustand und einem Pendelzustand ausgebildet ist. Insbesondere handelt es sich bei der Pendelachse um eine sog. starre Pendelachse. Die Pendelachse umfasst einen starren, insbesondere durchgehenden Achskörper, der beispielhaft um eine einzige Schwenkachse verschwenkbar an der Arbeitsmaschine aufgenommen ist.

Da die Blockiervorrichtung keine hydraulische Kopplung mit einer Bordhydraulik der Arbeitsmaschine bzw. des Arbeitsgeräts erforderlich macht, kann die Pendelachsbaugruppe modular ausgebildet sein.

Die Arbeitsmaschine betreffend wird die Aufgabe der vorliegenden Offenbarung durch eine mobile Arbeitsmaschine gelöst, die ein Fahrwerk aufweist, das zumindest eine Pendelachsbaugruppe nach zumindest einem der hierin genannten Aspekte aufweist, mit einer Blockiervorrichtung zur Aktivierung der Pendelachse, wobei die Pendelachse vorzugsweise als starre Pendelachse ausgeführt und schwenkbar an einem Gestell der Arbeitsmaschine aufgenommen ist, wobei sich die Zylinderanordnung zwischen einem dem Gestell zugeordneten Oberteil (Fahrwagen) und einem Unterteil (Achsanordnung mit der Pendelachse) erstreckt, und wobei das Oberteil und das Unterteil in einem Pendelzustand relativ zueinander verschwenkbar sind.

Wie vorstehend bereits ausgeführt, kann es sich bei dem Gestell der Arbeitsmaschine etwa um ein Fahrgestell oder um einen selbsttragenden Aufbau handeln, mit dem die Pendelachse mittelbar oder unmittelbar schwenkbar gekoppelt ist.

Der Begriff starre Pendelachse soll nicht einschränkend verstanden werden. Insbesondere geht es darum, dass zwei Enden des Achskörpers der Pendelachse, an denen Räder aufgenommen sind, im Wesentlichen starr miteinander verbunden sind. Insgesamt ist der Achskörper beweglich, insbesondere schwenkbar, mit dem Gestell gekoppelt.

Gemäß einer Weiterbildung der Arbeitsmaschine weist diese ferner eine Bordhydraulik auf, wobei die Vorrichtung als elektrohydraulische Blockiervorrichtung ausgebildet ist und hydraulisch unabhängig von der Bordhydraulik der Arbeitsmaschine ausgeführt oder betreibbar ist. Gemäß alternativer Ausgestaltungen weist die Arbeitsmaschine keine eigene Bordhydraulik im obigen Sinn auf. Auch bei derartigen Ausgestaltungen kann die autarke elektro-hydraulische Blockiervorrichtung eingesetzt werden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden, durch die Ansprüche definierten Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine perspektivische Ansicht einer beispielhaften Ausführungsform einer mobilen Arbeitsmaschine in Form eines Radladers;
- Fig. 2: eine schematische frontale Ansicht einer weiteren Ausführungsform einer mobilen Arbeitsmaschine;
- Fig. 3: eine schematische Symboldarstellung einer Ausführungsform einer Vorrichtung zur Ansteuerung einer Pendelachse in einem ersten Zustand;
- Fig. 4: eine weitere schematische Symboldarstellung der Vorrichtung gemäß Fig. 4 in einem zweiten Zustand, wobei ferner eine Pendelachse angedeutet ist;
- Fig. 5: eine schematische Symboldarstellung einer weiteren Ausführungsform einer Vorrichtung zur Ansteuerung einer Pendelachse; und
- Fig. 6: eine schematische Symboldarstellung noch einer weiteren Ausführungsform einer Vorrichtung zur Ansteuerung einer Pendelachse.

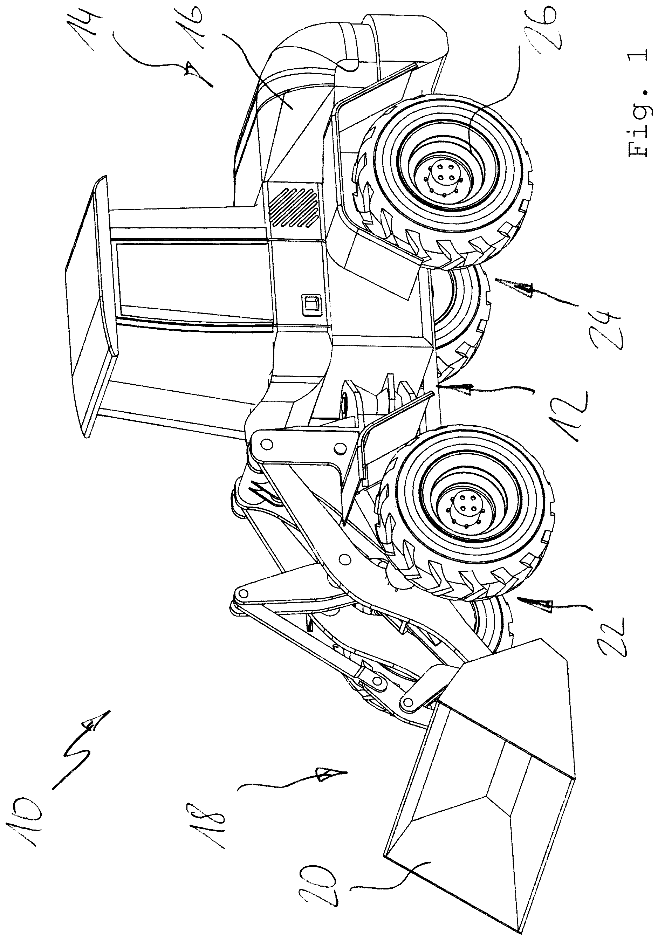

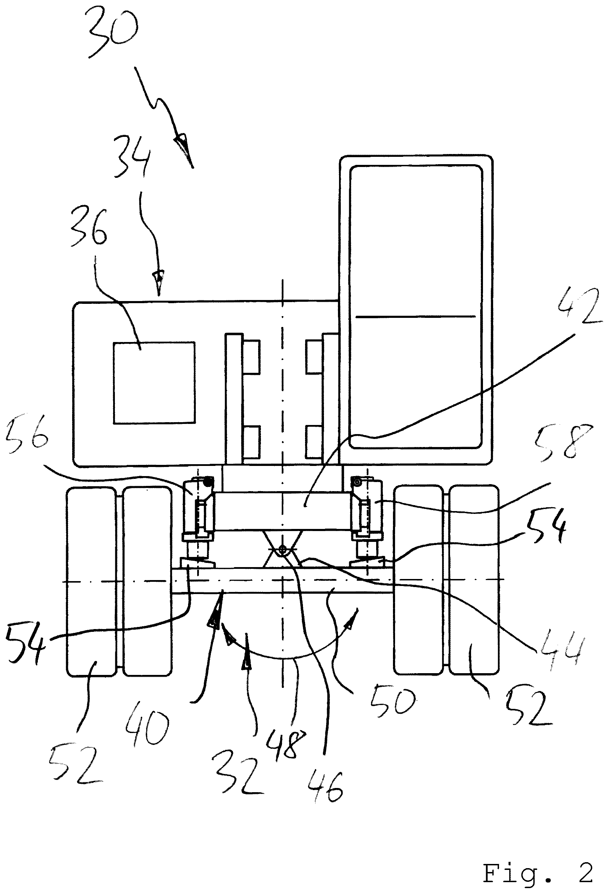

Fig. 1 zeigt eine beispielhafte perspektivische Darstellung einer mobilen Arbeitsmaschine 10, die etwa als Radlader ausgeführt ist. Ergänzend veranschaulicht Fig. 2 eine schematische frontale Ansicht einer weiteren mobilen Arbeitsmaschine 30, die etwa als Bagger ausgestaltet ist, wobei auf die Darstellung eines Auslegers sowie eines Anbauwerkzeugs aus Veranschaulichungsgründen verzichtet wird. Bei den mobilen Arbeitsmaschinen 10, 30 handelt es sich um solche, die zumindest eine Pendelachse umfassen.

Allgemein können mobile Arbeitsmaschinen auch als mobile Arbeitsgeräte bezeichnet werden. Neben den in den Fig. 1 und 2 veranschaulichten Ausführungsformen mobiler Arbeitsmaschinen 10, 30 sind auch forstwirtschaftliche Arbeitsmaschinen, Transportfahrzeuge, landwirtschaftliche Arbeitsmaschinen und Fahrzeuge sowie Anhänger hierfür vorstellbar.

Die in Fig. 1 veranschaulichte Arbeitsmaschine 10 weist ein Fahrgestell 12 auf, das etwa einen Rahmen umfasst. Am Fahrgestell 12 ist ein Aufbau 14 ausgebildet, der etwa einen Führerstand oder ein Führerhaus umfasst. Ferner ist am Fahrgestell 12 ein Antrieb 16 aufgenommen, der zumindest teilweise vom Aufbau 14 abgedeckt bzw. eingehaust ist. Bei dem Antrieb 16 kann es sich etwa um einen verbrennungsmotorischen Antrieb handeln.

Ferner ist an der mobilen Arbeitsmaschine 10, insbesondere an deren Fahrgestell 12, ein Anbaugerät 18 aufgenommen und etwa über einen Auslegermechanismus mit diesem verbunden. Bei dem Anbaugerät 18 kann es sich etwa um ein Werkzeug 20 in Form einer Schaufel handeln. Andere Anbaugeräte 18 sind vorstellbar.

Die in Fig. 1 gezeigte mobile Arbeitsmaschine 10 umfasst eine erste Achse 22 und eine zweite Achse 24, die in Längsrichtung der Arbeitsmaschine 10 von der ersten Achse 22 versetzt ist. Vorzugsweise ist zumindest eine der beiden Achsen 22, 24 als sog. Pendelachse ausgeführt. An den Achsen 22, 24 sind Räder 26 aufgenommen.

Pendelachsen erlauben allgemein eine ausgeprägte Verschränkung zwischen dem Fahrgestell 12 und einem Achskörper der Pendelachse. Auf diese Weise eignen sich die mobilen Arbeitsmaschinen 10, 30 auch für Einsätze in schwerem Gelände.

Ergänzend wird auf Fig. 2 Bezug genommen, die in symbolhafter Darstellung eine weitere Ausführungsform einer mobilen Arbeitsmaschine 30 veranschaulicht. Auch die Arbeitsmaschine 30 umfasst ein Gestell 32, an dem ein Aufbau 34 aufgenommen ist. Das Gestell 32 kann auch als Unterwagen bezeichnet werden. Ferner weist die Arbeitsmaschine 30 eine Bordhydraulik 36 auf, die in Fig. 2 lediglich symbolhaft dargestellt ist. Die Bordhydraulik 36 kann etwa mit einem Antriebsmotor der Arbeitsmaschine 30 gekoppelt sein, so dass an Bord der Arbeitsmaschine 30 Druck erzeugt werden kann. Die Bordhydraulik 36 treibt beispielhaft einen Ausleger bzw. ein Anbauwerkzeug der Arbeitsmaschine 30 an (in Fig. 2 nicht dargestellt).

Ferner weist die Arbeitsmaschine 30 zumindest eine Pendelachse 40 auf, die ein Oberteil 42 und ein Unterteil 44 über ein Gelenk 46 gelenkig miteinander koppelt. Beispielhaft kann das Oberteil 42 als Unterwagen bezeichnet werden. Das Unterteil 44 kann als Achse bzw. Achsanordnung bezeichnet werden. Das Oberteil 42 ist beispielhaft einer Rahmenstruktur des Gestells 32 zugeordnet. Das Unterteil 44 ist beispielhaft einer Achsseite bzw. einem Fahrwerk der Arbeitsmaschine 30 zugeordnet.

Die Pendelachse 40 umfasst einen Achskörper 50, der als in sich starrer Achskörper gestaltet ist. Der Achskörper 50 verbindet zwei Räder 52, die an einem jeweiligen Ende des Achskörpers 50 aufgenommen sind. Der Achskörper 50 ist über das Gelenk 46 mit dem Gestell 32 gelenkig gekoppelt. Mit anderen Worten kann der Achskörper 50 gegenüber dem Aufbau 34 der Arbeitsmaschine 30 pendeln, wenn die Arbeitsmaschine 30 in unwegsamem Gelände bewegt wird.

Das Gelenk 46 der Pendelachse 40 ist etwa mittig entlang der Längserstreckung des Achskörpers 50 angeordnet. Ein in Fig. 2 mit 48 bezeichneter gekrümmter Doppelpfeil veranschaulicht eine Schwenkbewegung oder Pendelbewegung des Achskörpers 50 relativ zum Oberteil 42 bzw. zum Aufbau 34.

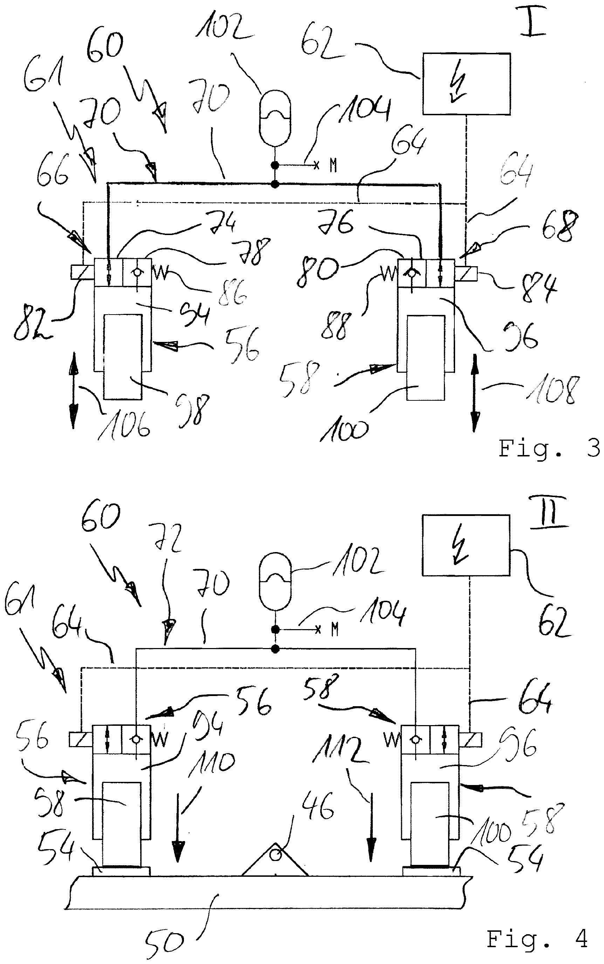

Es sind Anwendungsfälle bzw. Einsatzbedingungen vorstellbar, bei denen es vorteilhaft ist, die Pendelachse 40 zu blockieren bzw. zu arretieren. Mit anderen Worten geht es darum, die Schwenkbewegung des Achskörpers 50 relativ zum Oberteil 42 zu blockieren bzw. zu unterbinden. Dies kann grundsätzlich mit einer Blockiervorrichtung oder Arretiervorrichtung 60 herbeigeführt werden, die nachfolgend mit ergänzender Bezugnahme auf die Fig. 3 und 4 näher veranschaulicht wird.

In Fig. 2 sind beispielhaft ein erster Zylinder 56 und ein zweiter Zylinder 58 dargestellt, die gestellseitig, etwa am Unterwagen bzw. Oberteil 42 aufgenommen sind. Stempel oder Kolben der Zylinder 56, 58 können ausfahren und Druckstücke 54 des Achskörpers 50 kontaktieren, um dessen Schwenkbewegung zu unterbinden. Auf diese Weise kann die Pendelachse 40 gesperrt werden, wenn die Zylinder 56, 58 blockieren.

Mit Bezugnahme auf Fig. 3 und Fig. 4 wird eine Vorrichtung 60 zum Blockieren oder Arretieren einer Pendelachse 40 näher veranschaulicht. Fig. 3 zeigt die Vorrichtung in einem ersten Zustand I, der auch als Pendelzustand bezeichnet werden kann. Fig. 4 zeigt die Vorrichtung 60 in einem zweiten Zustand II, der auch als Sperrzustand oder Arretierzustand bezeichnet werden kann.

Die Vorrichtung 60 umfasst eine Ventilanordnung 61, die bespielhaft einen ersten Zylinder 56 und einen zweiten Zylinder 58 umfasst, deren möglicher Einbauort bereits in Zusammenhang mit dem Ausführungsbeispiel gemäß der Fig. 2 erläutert wurde.

Demgemäß sind die Zylinder 56, 58 gestellseitig aufgenommen und jeweils einem Ende eines Achskörpers 50 einer Pendelachse 40 zugeordnet, zwischen denen ein Pendelgelenk 46 ausgebildet ist, vgl. hierzu auch die Darstellung in Fig. 4.

Die Vorrichtung 60 umfasst eine Steuereinrichtung 62, insbesondere eine elektrische und/oder elektronische Steuereinrichtung. Die Steuereinrichtung 62 ist über Steuerleitungen 64 mit einem ersten Steuerventil 66 und einem zweiten Steuerventil 68 gekoppelt.

Das erste Steuerventil 66 ist dem ersten Zylinder 56 zugeordnet. Das zweite Steuerventil 68 ist dem zweiten Zylinder 58 zugeordnet. Die Steuerventile 66, 68 sind über die Steuereinrichtung 62 elektrisch ansteuerbar.

Die Steuerventile 66, 68 sind über eine Fluidleitung 70 miteinander verbunden. Die Steuerventile 66, 68 und die Fluidleitung 70 sind einem hydraulischen System 72 zugeordnet, das von einer Bordhydraulik 36 (vgl. hierzu auch Fig. 2) der Arbeitsmaschine - falls vorhanden - getrennt ausgeführt ist. Mit anderen Worten ist die Vorrichtung 60 als autarke Vorrichtung ausgeführt und weist ein autarkes hydraulisches System 72 auf.

Das erste Steuerventil 66 weist ein erstes Wegeventil 74 auf. Das zweite Steuerventil 68 weist ein zweites Wegeventil 76 auf. Die Wegeventile 74, 76 sind beispielhaft als 2/2-Wegeventile, insbesondere als 2/2-Wege-Sitzventile ausgebildet. Die Wegeventile 74, 76 können in einer ersten Stellung und in einer zweiten Stellung betrieben werden. In der ersten Stellung, vgl. Fig. 3, sind die Wegeventile 74, 76 auf Durchlass geschaltet.

In der zweiten Stellung, vgl. Fig. 4, sind die Wegeventile 74, 76 in eine Sperrstellung verbracht, die eine Strömung durch die Wegeventile 74, 76 in Richtung auf die Fluidleitung 70 und somit das andere der Wegeventile 74, 76 unterbindet. Eine entgegengerichtete Strömung über die Fluidleitung 70 in Richtung auf die Zylinder 56, 58 ist hingegen erlaubt. In der zweiten Stellung werden die Wegeventile 74, 76 nach Art eines Rückschlagventils 78, 80 betrieben, vgl. auch die Symboldarstellungen der Schaltstellungen I und II der Wegeventile 74, 76 in den Fig. 3 und 4.

Die Wegeventile 74, 76 können eine Rückschlagventilstufe 78, 80 integrieren. Alternativ ist es auch vorstellbar, separate Rückschlagventile 78, 80 an die Wegeventile 74, 76 anzuflanschen.

Die Betätigung der Wegeventile 74, 76 erfolgt über Aktoren 82, 84, beispielsweise über Elektromagnete. Ein erster Aktor 82 ist dem ersten Wegeventil 74 zugeordnet. Ein zweiter Aktor 84 ist dem zweiten Wegeventil 76 zugeordnet. Die Ansteuerung erfolgt bevorzugt elektrisch (oder elektronisch). Grundsätzlich ist auch eine mechanische oder pneumatische Ansteuerung vorstellbar. Auch eine hydraulische Ansteuerung über ein (separates, getrenntes) hydraulisches System ist vorstellbar.

Das Wegeventil 74 umfasst beispielhaft neben dem Aktor 82 auch ein Rückstellelement, insbesondere eine Rückstellfeder 86. Das Wegeventil 76 umfasst neben dem Aktor 84 ferner ein Rückstellelement, beispielhaft eine Rückstellfeder 88. Die Rückstellfedern oder Rückstellelemente 86, 88 belasten bzw. drängen die Wegeventile 74, 76 in Richtung auf die in Fig. 4 veranschaulichte Schaltstellung II, welche der Sperrstellung entspricht.

Der erste Zylinder 56 umfasst einen Zylinderraum, der eine Hubkammer 94 definiert. Der zweite Zylinder 58 umfasst einen Zylinderraum, der eine Hubkammer 96 definiert. Ferner ist am ersten Zylinder 56 ein Kolben bzw. eine Kolbenstange 98 aufgenommen. Am zweiten Zylinder 58 ist ein Kolben bzw. eine Kolbenstange 100 aufgenommen. Die Kolben 98, 100 können auch als Plungerkolben bezeichnet werden. Die Zylinder 56, 58 sind beispielhaft als einfachwirkende Zylinder ausgestaltet. Mit anderen Worten können die Kolben 98, 100 zwar druckgesteuert aus den Hubkammern 94, 96 ausfahren, aber nicht selbstständig wieder in diese einfahren. Das Einfahren erfolgt durch äußere Kräfte.

Gemäß einer beispielhaften Ausführungsform umfasst die Vorrichtung 60 ferner ein Druckreservoir 102, das etwa als Druckspeicher bzw. Puffer fungiert. Das Reservoir 102 ist mit der Fluidleitung 70 gekoppelt. Das Reservoir 102 ist dem hydraulischen System 72 zugeordnet. Das hydraulische System 72 erfordert keinen separaten Druckerzeuger. Vielmehr genügt eine Erstbefüllung bzw. ein initiales Unter-Druck-Setzen des Reservoirs 102, um die Vorrichtung 60 über einen langen Zeitraum betreiben zu können. Beispielhaft wird das Reservoir 102 auf einen Druck (Überdruck) von etwa 30 bar aufgeladen. Auf diese Weise wird sichergestellt, dass zumindest in der Fluidleitung 70 ein konstanter oder nahezu konstanter hoher Druck herrscht.

Ferner ist in den Fig. 3 und 4 mit 104 ein Messanschluss angedeutet, der an die Fluidleitung 70 bzw. an das Reservoir 102 ankoppelt. Der Messanschluss 104 kann zur Überprüfung des Vorspanndrucks bzw. der Vorspannung im Reservoir 102 und ggf. zur Korrektur des Druckes genutzt werden. Über den Messanschluss 104 kann etwa ein aktueller Druck im System 72 erfasst werden. Ferner kann über den Messanschluss 104 in Ausnahmefällen eine Befüllung des Systems 72 bzw. eine Druckerhöhung erfolgen. Zu diesem Zweck kann der Messanschluss 104 mit geeigneten Messeinrichtungen und/oder Druckerzeugungseinrichtungen gekoppelt werden.

Im Pendelmodus, der in Fig. 3 veranschaulicht ist, sind die Steuerventile 66, 68 auf Durchlass geschaltet. Demgemäß kann das Fluid über die Fluidleitung 70 zwischen den Hubkammern 94, 96 hin und her strömen. Mit anderen Worten bewirkt etwa ein Einfahren des ersten Kolbens 98 ein Ausfahren des zweiten Kolbens 100 und umgekehrt. Zur Veranschaulichung sind in Fig. 3 mit 106, 108 bezeichnete Doppelpfeile dargestellt. Ein Achskörper 50 einer Pendelachse 40, vgl. auch Fig. 2 und Fig. 4, beaufschlagt je nach aktueller Pendelbewegung einen der Kolben 98, 100. Der jeweils andere Kolben 98, 100 wird vom Achskörper 50 entlastet und durch eine Verdrängung des Fluids aus der Hubkammer 96 über die Fluidleitung 70 in die Hubkammer 94 zumindest ein Stück weit ausgefahren.

Mit anderen Worten sind die Zylinder 56, 58, insbesondere deren Kolben 98, 100 bzw. Hubkammern 94, 96 über die Fluidleitung 70 hydraulisch miteinander gekoppelt. Über das Reservoir 102 kann ein allgemeiner Nenn-Druck oder Systemdruck bereitgestellt werden. Es ist jedoch nicht vorgesehen, dass beim Belasten eines der Kolben 98, 100 entgegen der jeweiligen Ausfahrrichtung ein nennenswerter Rückfluss des Fluids in das Reservoir 102 erfolgt. Vielmehr definiert und gewährleistet das Reservoir 102 einen allgemeinen Nenn-Druck im System 72.

Sollte es jedoch Hubunterschiede zwischen den Kolben 98, 100 der Zylinder 56, 58 geben, so kann über das Reservoir 102 ein Ausgleich erfolgen. Somit kann etwa ein gewünschtes umgekehrt proportionales Verhalten der Zylinder 56, 58 beim Einfahren bzw. Ausfahren bewirkt werden.

Auf diese Weise kann sichergestellt werden, dass insbesondere die Kolben 98, 100 die Druckstücke 54 des Achskörpers 50 der Pendelachse 40 kontaktieren.

Auf diese Weise kann etwa beim Überfahren von Bodenunebenheiten die gewünschte Pendelbewegung der Pendelachse 40 bewirkt werden.

Fig. 4 veranschaulicht einen Zustand II der Vorrichtung 60, bei dem die Steuerventile 66, 68 zum jeweiligen Zylinder 56, 58 hin geöffnet sind. In der Gegenrichtung sind die Steuerventile 66, 68 jeweils geschlossen. Der Zustand II gemäß Fig. 4 kann auch als Blockierzustand oder Arretierzustand bezeichnet werden.

Im Blockierzustand II kann also das Fluid nur in die jeweilige Hubkammer 94, 96 hineinströmen, nicht jedoch aus den Hubkammern 94, 96 heraus. Dies führt innerhalb kurzer Zeit dazu, dass die Pendelachse 40 in sich gesperrt ist. In Fig. 4 veranschaulichen mit 110, 112 bezeichnete Pfeile, dass die Kolben 98, 100 im Sperrzustand nur noch ausfahren können. Im Sperrzustand II kann der Achskörper 50 der Pendelachse 40 nicht mehr um das Gelenk 46 verschwenkt werden.

Sollte es im Sperrzustand II zu einer Entlastung eines der Kolben 98, 100 kommen, so sorgt das unter Druck stehende Reservoir 102 dafür, dass das Fluid jeweils über die Steuerventile 66, 68 zeitnah in die Hubkammer 94, 96 einströmt, um den Kolben 98, 100 entsprechend weiter auszufahren.

Auf diese Weise erfolgt bei einseitiger Belastung eines der beiden Zylinder 56, 58 ein Nachspannen bzw. eine Nachbefüllung der Hubkammer 94, 96 des jeweils anderen Zylinders 56, 58.

Sofern keine äußere Last über den Achskörper 50 auf die Kolben 98, 100 einwirkt, insbesondere einseitig einwirkt, sind die Kolben 98, 100 der Zylinder 56, 58 jeweils mit einem vergleichbaren Druck vorgespannt.

Im Sperrzustand II führt das Nachsaugen des gerade unbelasteten Zylinders 56, 58 bei vorzugsweise nur einer Belastung (insbesondere bei nur einer einzigen Belastung) des gegenüberliegenden Zylinders 56, 58 zum Druckanstieg des eingesperrten Ölvolumens auf ein Vielfaches des Speicherdruckes im Reservoir 102. Dies hat zur Folge, dass sich die gesperrte Pendelachse 40 deutlich stabiler und steifer verhält. Dies kann das Arbeiten bzw. Verfahren der Arbeitsmaschine verbessern. Insbesondere die parallele Anordnung der Rückschlagventile 78, 80 der Steuerventile 66, 68 trägt hierzu bei.

Insgesamt kann sich auf diese Weise eine stabile Sperrwirkung bzw. Arretierwirkung für die Pendelachse 40 ergeben.

Die anhand der vorstehend beschriebenen Figuren veranschaulichte Sperrvorrichtung 60 weist den Vorteil der direkten (kabelgebundenen oder kabellosen) elektrischen Ansteuerung der Steuerventile 66, 68 auf. Die Steuereinrichtung 62 kann die Aktoren 82, 84 der Steuerventile 66, 68 ansteuern, um die Steuerventile 66, 68 im Pendelzustand oder im Sperrzustand entsprechend der ersten Stellung oder der zweiten Stellung zu betreiben. Die in Fig. 3 gezeigte Stellung veranschaulicht einen Zustand, bei dem die Aktoren 82, 84 bestromt sind. Die Fig. 4 veranschaulicht einen zweiten Zustand, bei dem die Aktoren 82, 84 stromlos sind bzw. nicht bestromt werden.

Ein weiterer Vorteil der Vorrichtung 60 besteht darin, dass keine separaten (hydraulischen) Steuerleitungen erforderlich sind. Insbesondere kann etwa auf aufwendige Drehdurchführungen für hydraulische Leitungen verzichtet werden. Es besteht keine hydraulische Kopplung mit der Bordhydraulik 36 der Arbeitsmaschine 10, 30.

Das Reservoir 102 kann als Druckspeicher fungieren und somit etwa Ölverluste bzw. Fluidverluste im hydraulischen System 72 ausgleichen.

Im Sperrzustand "pumpt" der Druckspeicher 102 über die Fluidleitung 70 im Falle von Belastungen und Entlastungen die Zylinder 56, 58 auf. Auf diese Weise kann mit einfachen Mitteln ein Spielausgleich betreffend den Kontakt zwischen den Kolben 98, 100 sowie den Auflagen oder Druckstücken 54 am Achskörper 50 erfolgen. Es ist vorzugsweise keine manuelle Nachstellung oder Nachjustierung erforderlich. Bei Wegnahme der äußeren Belastung kommt es aufgrund der Gestaltung gemäß der vorliegenden Offenbarung zu einer erhöhten Druckvorspannung. Insgesamt ergibt sich auf diese Weise eine sehr stabile und steife Sperrstellung

Der Verzicht auf die (hydraulische) Steuerleitung führt ferner zu einem äußerst robusten Steuerverhalten. Druckschwankungen bei der Bordhydraulik haben keine Auswirkungen auf die Vorrichtung 60.

Insgesamt kann die Zahl der erforderlichen hydraulischen Schnittstellen deutlich reduziert werden. Leckagen können vermieden werden. Der Verschraubungsaufwand für hydraulische Leitungen sinkt deutlich. Auf diese Weise kann der Aufwand für die Herstellung und auch die Montage der Vorrichtung 60 bzw. einer mit dieser versehenen Pendelachse 40 deutlich reduziert werden.

Ferner ergeben sich hohe Freiheitsgrade für die Gestaltung der Arbeitsmaschinen 10, 30 bzw. bei der Auslegung und Gestaltung von Fahrgestellen, Pendelachsen sowie Sperrvorrichtungen hierfür.

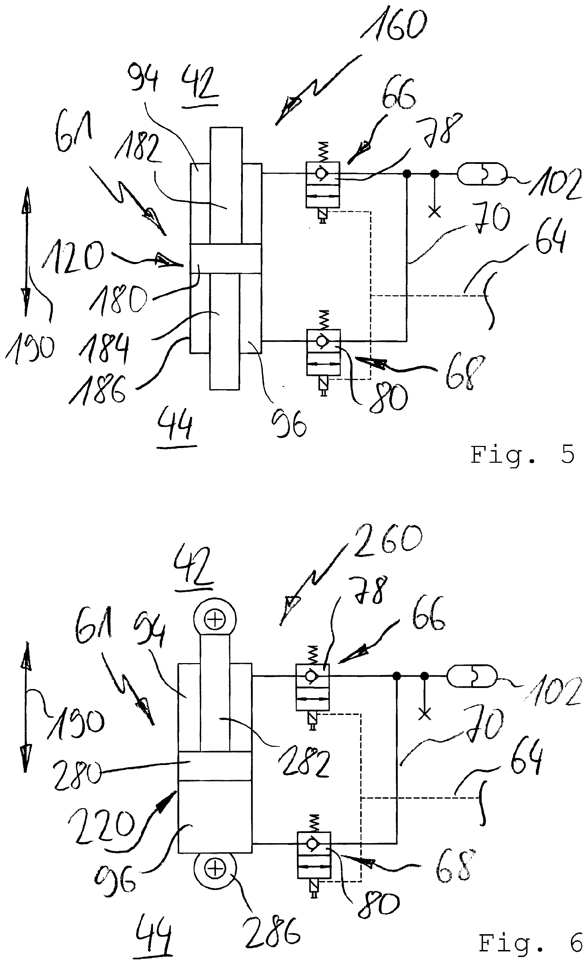

Mit Bezugnahme auf die Fig. 5 und 6 werden alternative Ausgestaltungen von Blockiervorrichtungen oder Arretiervorrichtungen beschrieben. Die Vorrichtungen sind insgesamt mit 160 sowie 260 bezeichnet und werden in der Sperrstellung oder Bockierstellung gezeigt, vgl. auch Fig. 4. Vorrichtungen 160 sowie 260 gemäß den Fig. 5 und 6 sind der Vorrichtung 60 gemäß den Fig. 3 und 4 grundsätzlich ähnlich gestaltet. Dies gilt insbesondere im Hinblick auf die Ansteuerung mit den Steuerblöcken bzw. Steuerventilen 66, 68 sowie auf die vorzugsweise nicht-hydraulische Steuerung über die Steuereinrichtung 62. Die Steuereinrichtung 62 ist in den Fig. 5 und 6 nicht dargestellt. Jedoch ist die Steuerleitung 64 angedeutet. Auch bei den Gestaltungen gemäß den Fig. 5 und 6 ist ein als Druckspeicher ausgebildetes Reservoir 102 vorgesehen, dass permanent fluidisch mit einer Fluidleitung 70 gekoppelt ist, die eine erste Hubkammer 94 und eine zweite Hubkammer 96 des miteinander über die Steuerventile 66, 68 verbindet. Alternativen zum Reservoir 102 sind vorstehend beschrieben.

Die Vorrichtungen 160, 260 gemäß Fig. 5 umfasst eine Zylinderanordnung 61 mit einem einzigen Zylinder 120, der als doppeltwirkender Zylinder ausgeführt ist. In ähnlicher Weise umfasst die Vorrichtung 260 gemäß Fig. 5 eine Zylinderanordnung 61 mit einem einzigen Zylinder 220, der als doppeltwirkender Zylinder ausgeführt ist. Bereits mit zumindest einem doppeltwirkenden Zylinder 120, 220 kann die vorstehend beschriebene Blockierfunktion bzw. Sperrwirkung der Pendelachse 40 (in den Fig. 5 und 6 nicht explizit dargestellt) bewirkt werden.

Der Zylinder 120 ist als Gleichlaufzylinder ausgestaltet und mit der ersten Hubkammer 94 und der zweiten Hubkammer 96 versehen, die beidseitig eines Kolbens 180 angeordnet sind. Ferner ist eine erste Kolbenstange 182 sowie eine zweite Kolbenstange 184 vorgesehen. Die erste Kolbenstange 182 und die zweite Kolbenstange 184 sind über den Kolben 180 fest miteinander verbunden. Beide Wirkflächen des Kolbens 180 sind dank der Kolbenstangen 182, 184 etwa gleich groß. Die Kolbenstange 182 ist der ersten Hubkammer 94 und die Kolbenstange 182 der zweiten Hubkammer 96 zugeordnet.

Der Zylinder 220 ist als Differentialzylinder ausgestaltet und mit der ersten Hubkammer 94 und der zweiten Hubkammer 96 versehen, die beidseitig eines Kolbens 280 angeordnet sind. Ferner ist eine einzige Kolbenstange 282 vorgesehen, die der ersten Hubkammer 94 zugeordnet ist. Lediglich eine Wirkfläche des Kolbens 280 ist mit einer Kolbenstange gekoppelt. Demgemäß sind die beiden Wirkflächen des Kolbens 280 nicht gleich groß. Mit anderen Worten wird beim Ein- und Ausfahren des Kolbens 280 in den beiden Hubkammern 94, 96 nicht jeweils das gleiche Volumen verdrängt. Dies kann jedoch steuerungstechnisch berücksichtig werden.

In den Fig. 5 und 6 ist beispielhaft jeweils ein Gehäuseteil oder Wandungsteil 186, 286 der Zylinder 120, 220 mit dem Unterwagen (Oberteil 42) oder der Achsanordnung (Unterteil 44) gekoppelt. Eine Kolbenstange 182, 282 ist demgemäß dem anderen Teil zugeordnet. Mit anderen Worten ist es gemäß diesen Ausgestaltungen ausreichend, wenn lediglich ein doppeltwirkender Zylinder 120, 220 einer Seite (z.B. rechts oder links) der Pendelachse 40 zugeordnet ist und sich zwischen dem Achskörper 50 und dem Gestell 32 erstreckt, vgl. auch die in Fig. 2 gezeigte abweichende Einbausituation mit zwei Zylindern 56, 58.

In der in den Fig. 5 und 6 gezeigten Sperrstellung sind die Steuerventile 66, 68 jeweils so geschaltet, dass die Fluidströmung über Rückschlagventile 78, 80 erfolgt. Das Rückschlagventil 78 erlaubt eine Fluidströmung in Richtung auf die erste Hubkammer 94 und unterbindet einen entgegengesetzten Rückfluss. Das Rückschlagventil 80 erlaubt eine Fluidströmung in Richtung auf die zweite Hubkammer 96 und unterbindet einen entgegengesetzten Rückfluss. Somit kann die Pendelachse 40 effektiv und wirksam mit hoher Vorspannung gesperrt werden. Die Bewegungsrichtung des Kolbens 180, 280 in der Pendelstellung der Blockiervorrichtungen 160, 260 wird in Fig. 5 und 6 jeweils durch einen Doppelpfeil 190 veranschaulicht.

## Patentansprüche

1. Pendelachsbaugruppe für eine mobile Arbeitsmaschine (10, 30), mit einer Pendelachse (40) und einer Blockiervorrichtung (60) zum selektiven Betreiben der Pendelachse (40) in einem Sperrzustand und einem Pendelzustand, wobei die Blockiervorrichtung (60) Folgendes aufweist:
- eine Zylinderanordnung (61) zur Aufnahme zwischen der Pendelachse (40) und einem Gestell (12, 32) der Arbeitsmaschine (10, 30), die eine erste Hubkammer (94) und eine zweite Hubkammer (96) aufweist, insbesondere einen ersten Zylinder (56) und einen zweiten Zylinder (58), die jeweils einer Seite einer Pendelachse (40) zugeordnet sind,
- ein erstes Steuerventil (66), das der ersten Hubkammer (94) zugeordnet ist,
- ein zweites Steuerventil (68), das der zweiten Hubkammer (96) zugeordnet ist,
- eine Fluidleitung (70), die die erste Hubkammer (94) und die zweite Hubkammer (96), insbesondere den ersten Zylinder (56) und den zweiten Zylinder (58), miteinander verbindet, und
- eine Steuereinrichtung (62), die zur Ansteuerung mit dem ersten Steuerventil (66) und dem zweiten Steuerventil (68) elektrisch verbindbar ist,
wobei die Zylinderanordnung (61), die Steuerventile (66, 68) und die Fluidleitung ein in sich geschlossenes druckerzeugerloses hydraulisches System (72) bilden, wobei die Steuerventile (66, 68) über die Steuereinrichtung (62) aktivierbar sind, um die Pendelachse (40) zu blockieren oder freizugeben,
wobei die Blockiervorrichtung (60) hydraulisch autark gestaltet ist, und
wobei das erste Steuerventil (66) und das zweite Steuerventil (68) direkt elektrisch ansteuerbar sind.

2. Pendelachsbaugruppe nach Anspruch 1, wobei die Blockiervorrichtung (60) als elektrohydraulische Blockiervorrichtung für eine Pendelachse (40) einer mobilen Arbeitsmaschine (10, 30), insbesondere eines Nutzfahrzeugs, einer Baumaschine oder einer Landmaschine, ausgestaltet ist.

3. Pendelachsbaugruppe nach Anspruch 1 oder 2, wobei die Steuereinrichtung (62) als nicht-hydraulische, elektrische Steuereinrichtung ausgebildet ist und über elektrische Steuerleitungen (64) mit dem ersten Steuerventil (66) und dem zweiten Steuerventil (68) verbindbar ist, insbesondere mit Aktoren (82, 84) des ersten Steuerventils (66) und des zweiten Steuerventils (68).

4. Pendelachsbaugruppe nach einem der vorhergehenden Ansprüche, wobei Aktoren (82, 84) des ersten Steuerventils (66) und des zweiten Steuerventils (68) direkt elektrisch ansteuerbar sind.

5. Pendelachsbaugruppe nach einem der vorhergehenden Ansprüche, wobei zumindest ein Ventil des ersten Steuerventils (66) und des zweiten Steuerventils (68) als Wegeventil (74, 76), insbesondere als 2/2 Wege-Sitzventil aufgeführt ist.

6. Pendelachsbaugruppe nach einem der vorhergehenden Ansprüche, wobei die Steuereinrichtung (62) dazu ausgebildet ist, das erste Steuerventil (66) und das zweite Steuerventil (68) gleichzeitig in einer ersten Schaltstellung oder einer zweiten Schaltstellung zu betreiben.

7. Pendelachsbaugruppe nach einem der vorhergehenden Ansprüche, wobei die Zylinderanordnung (61) einen ersten Zylinder (56), umfassend die erste Hubkammer (94), und einen zweiten Zylinder (58), umfassend die zweite Hubkammer (96), aufweist, die jeweils an einer Seite der Pendelachse (40) angeordnet sind, und wobei der erste Zylinder (56) und der zweite Zylinder (58) als einfachwirkende Zylinder ausgestaltet sind.

8. Pendelachsbaugruppe nach einem der Ansprüche 1 bis 6, wobei die Zylinderanordnung (61) einen doppeltwirkenden Zylinder (120, 220) aufweist, der die erste Hubkammer (94) und die zweite Hubkammer (96) umfasst.

9. Pendelachsbaugruppe nach einem der vorhergehenden Ansprüche, ferner aufweisend einen Druckspeicher (102), der an die Fluidleitung (70) ankoppelt, wobei der Druckspeicher (102) vorzugsweise zum Druckausgleich permanent hydraulisch mit der Fluidleitung (70) gekoppelt ist.

10. Pendelachsbaugruppe nach Anspruch 8 oder 9, wobei der Druckspeicher (102) eine initiale Vorspannung aufweist, wobei vorzugsweise ein Kontrollanschluss (104) vorgesehen ist, über den bedarfsweise eine Druckmessung oder eine Nachbefüllung erfolgt.

11. Pendelachsbaugruppe nach einem der vorhergehenden Ansprüche, wobei die erste Hubkammer (94) und die zweite Hubkammer (96) in einem Pendelzustand der Pendelachse (40) hydraulisch miteinander gekoppelt sind.

12. Pendelachsbaugruppe nach einem der vorhergehenden Ansprüche, wobei in einem Blockierzustand der Pendelachse (40) das erste Steuerventil (66) in Richtung auf die erste Hubkammer (94) und das zweite Steuerventil (68) in Richtung auf die zweite Hubkammer (96) geöffnet und entgegen der Öffnungsrichtung gesperrt sind.

13. Pendelachsbaugruppe nach einem der vorhergehenden Ansprüche, wobei die Pendelachse (40) als starre Pendelachse (40) ausgeführt und schwenkbar an einem Gestell (12, 32) der Arbeitsmaschine (10, 30) aufgenommen ist.

14. Mobile Arbeitsmaschine (10, 30) mit einem Fahrwerk, die zumindest eine Pendelachsbaugruppe mit einer Blockiervorrichtung (60) nach einem der Ansprüche 1 bis 13 zur Aktivierung der Pendelachse (40) aufweist, wobei die Pendelachse (40) vorzugsweise als starre Pendelachse (40) ausgeführt und schwenkbar an einem Gestell (12, 32) der Arbeitsmaschine (10, 30) aufgenommen ist, wobei sich die Zylinderanordnung (61) zwischen einem dem Gestell (12, 32) zugeordneten Oberteil (42) und einem Unterteil (44) der Pendelachse (40) erstrecken, und wobei das Oberteil (42) und das Unterteil (44) in einem Pendelzustand relativ zueinander verschwenkbar sind.

15. Arbeitsmaschine (10, 30) nach Anspruch 14, ferner aufweisend eine Bordhydraulik, wobei die Blockiervorrichtung (60) als elektrohydraulische Blockiervorrichtung ausgebildet ist und hydraulisch unabhängig von der Bordhydraulik (36) der Arbeitsmaschine (10, 30) ausgeführt ist.

## Claims

1. An oscillating axle assembly for a mobile working machine (10, 30), comprising an oscillating axle (40) and a blocking device (60) for selectively operating the oscillating axle (40) in a blocking state and an oscillating state, the blocking device (60) comprising:
- a cylinder arrangement (61) arranged to be supported between the oscillating axle (40) and a frame (12, 32) of the working machine (10, 30), and comprising a first lifting chamber (94) and a second lifting chamber (96), in particular a first cylinder (56) and a second cylinder (58), which are each assigned to one side of an oscillating axle (40),
- a first control valve (66) associated with the first lifting chamber (94),
- a second control valve (68) associated with the second lifting chamber (96),
- a fluid line (70) connecting the first lifting chamber (94) and the second lifting chamber (96), in particular the first cylinder (56) and the second cylinder (58), to one another, and
- a control device (62) which is arranged to be electrically connected, for actuation, to the first control valve (66) and the second control valve (68),
wherein the cylinder arrangement (61), the control valves (66, 68) and the fluid line form a self-contained pressure-generator-less hydraulic system (72),
wherein the control valves (66, 68) are activatable via the control device (62) in order to block or release the oscillating axle (40),
wherein the blocking device (60) is arranged to be hydraulically self-sufficient, and wherein the first control valve (66) and the second control valve (68) are arranged to be directly electrically actuated.

2. The oscillating axle assembly according to claim 1, wherein the blocking device (60) is arranged as an electrohydraulic blocking device for an oscillating axle (40) of a mobile working machine (10, 30), in particular of a utility vehicle, a construction machine or an agricultural machine.

3. The oscillating axle assembly according to claim 1 or 2, wherein the control device (62) is arranged as a non-hydraulic, electrical control device and to be connected via electrical control lines (64) to the first control valve (66) and the second control valve (68), in particular to actuators (82, 84) of the first control valve (66) and of the second control valve (68).

4. The oscillating axle assembly according to any one of the preceding claims, wherein actuators (82, 84) of the first control valve (66) and of the second control valve (68) are arranged to be directly electrically actuated.

5. The oscillating axle assembly according to any one of the preceding claims, wherein at least one valve of the first control valve (66) and of the second control valve (68) is arranged as a directional valve (74, 76), in particular as a 2/2-way seated valve.

6. The oscillating axle assembly according to any one of the preceding claims, wherein the control device (62) is arranged to operate the first control valve (66) and the second control valve (68) simultaneously in a first switch position or a second switch position.

7. The oscillating axle assembly according to any one of the preceding claims, wherein the cylinder arrangement (61) is provided with a first cylinder (56) comprising the first lifting chamber (94), and a second cylinder (58) comprising the second lifting chamber (96), which are each arranged on one side of the oscillating axle (40), and wherein the first cylinder (56) and the second cylinder (58) are configured as single-acting cylinders.

8. The oscillating axle assembly according to any one of claims 1 to 6, wherein the cylinder arrangement (61) is provided with a double-acting cylinder (120, 220) which comprises the first lifting chamber (94) and the second lifting chamber (96).

9. The oscillating axle assembly according to any one of the preceding claims, further comprising a pressure accumulator (102) which is coupled to the fluid line (70), wherein the pressure accumulator (102) is preferably permanently hydraulically coupled to the fluid line (70) for pressure compensation.

10. The oscillating axle assembly according to claim 8 or 9, wherein the pressure accumulator (102) has an initial preloading, wherein preferably a control connection (104) is provided, via which a pressure measurement or a refilling takes place, as required.

11. The oscillating axle assembly according to any one of the preceding claims, wherein the first lifting chamber (94) and the second lifting chamber (96) are hydraulically coupled to one another in an oscillating state of the oscillating axle (40).

12. The oscillating axle assembly according to any one of the preceding claims, wherein in a blocking state of the oscillating axle (40), the first control valve (66) is opened towards the first lifting chamber (94) and the second control valve (68) is opened towards the second lifting chamber (96), and are blocked opposite to the open direction.

13. The oscillating axle assembly according to any one of the preceding claims, wherein the oscillating axle (40) is arranged as a rigid oscillating axle (40) and pivotably mounted to a frame (12, 32) of the working machine (10, 30).

14. A mobile working machine (10, 30) having a chassis, the working machine (10, 30) comprising at least one oscillating axle assembly having a blocking device (60) according to any one of the claims 1 to 13 for activating the oscillating axle (40), wherein the oscillating axle (40) is preferably designed as a rigid oscillating axle (40) and pivotably mounted to a frame (12), 32) of the working machine (10, 30), wherein the cylinder arrangement (61) extends between an upper part (42) assigned to the frame (12, 32) and a lower part (44) of the oscillating axle (40), and wherein the upper part (42) and the lower part (44) are pivotable relative to one another in an oscillating state.

15. The working machine (10, 30) according to claim 14, further comprising an on-board hydraulic system, wherein the blocking device (60) is arranged as an electrohydraulic blocking device and hydraulically independent from the on-board hydraulic system (36) of the working machine (10, 30).

## Revendications

1. Ensemble d'essieu oscillant pour une machine de travail mobile (10, 30), comprenant un essieu oscillant (40) et un dispositif de blocage (60) pour faire fonctionner sélectivement l'essieu oscillant (40) dans un état de blocage et un état oscillant, le dispositif de blocage (60) comprenant les éléments suivants :
- un ensemble de cylindres (61) destiné à être logé entre l'essieu oscillant (40) et un châssis (12, 32) de la machine de travail (10, 30), lequel ensemble comprend une première chambre de levage (94) et une deuxième chambre de levage (96), en particulier un premier cylindre (56) et un deuxième cylindre (58) qui sont associés respectivement à un côté d'un essieu oscillant (40),
- une première soupape de commande (66) qui est associée à la première chambre de levage (94),
- une deuxième soupape de commande (68) qui est associée à la deuxième chambre de levage (96),
- une conduite de fluide (70) qui relie l'une à l'autre la première chambre de levage (94) et la deuxième chambre de levage (96), en particulier relie l'un à l'autre le premier cylindre (56) et le deuxième cylindre (58), et
- un dispositif de commande (62) qui peut être connecté électriquement à la première soupape de commande (66) et à la deuxième soupape de commande (68) pour la commande,
dans lequel l'ensemble de cylindres (61), les soupapes de commande (66, 68) et la conduite de fluide forment un système hydraulique (72) fermé sur lui-même et dépourvu de générateur de pression,
dans lequel les soupapes de commande (66, 68) peuvent être activées par le biais du dispositif de commande (62) afin de bloquer ou de libérer l'essieu oscillant (40),
dans lequel le dispositif de blocage (60) est conçu de manière autonome hydrauliquement, et
dans lequel la première soupape de commande (66) et la deuxième soupape de commande (68) peuvent être commandées électriquement directement.

2. Ensemble d'essieu oscillant selon la revendication 1, dans lequel le dispositif de blocage (60) est conçu en tant que dispositif de blocage électrohydraulique pour un essieu oscillant (40) d'une machine de travail mobile (10, 30), en particulier d'un véhicule utilitaire, d'un engin de chantier ou d'une machine agricole.

3. Ensemble d'essieu oscillant selon la revendication 1 ou 2, dans lequel le dispositif de commande (62) est réalisé sous forme de dispositif de commande électrique non hydraulique et peut être connecté, par le biais de lignes de commande électriques (64), à la première soupape de commande (66) et à la deuxième soupape de commande (68), en particulier à des actionneurs (82, 84) de la première soupape de commande (66) et de la deuxième soupape de commande (68).

4. Ensemble d'essieu oscillant selon l'une quelconque des revendications précédentes, dans lequel des actionneurs (82, 84) de la première soupape de commande (66) et de la deuxième soupape de commande (68) peuvent être commandés électriquement directement.

5. Ensemble d'essieu oscillant selon l'une quelconque des revendications précédentes, dans lequel au moins une soupape parmi la première soupape de commande (66) et la deuxième soupape de commande (68) est réalisée en tant que distributeur (74, 76), en particulier en tant que soupape à siège à 2/2 voies.

6. Ensemble d'essieu oscillant selon l'une quelconque des revendications précédentes, dans lequel le dispositif de commande (62) est conçu pour faire fonctionner la première soupape de commande (66) et la deuxième soupape de commande (68) simultanément dans une première position de commutation ou une deuxième position de commutation.

7. Ensemble d'essieu oscillant selon l'une quelconque des revendications précédentes, dans lequel l'ensemble de cylindres (61) comprend un premier cylindre (56), comportant la première chambre de levage (94), et un deuxième cylindre (58), comportant la deuxième chambre de levage (96), lesquels cylindres sont disposés respectivement sur un côté de l'essieu oscillant (40), et dans lequel le premier cylindre (56) et le deuxième cylindre (58) sont conçus sous forme de cylindres à simple effet.

8. Ensemble d'essieu oscillant selon l'une quelconque des revendications 1 à 6, dans lequel l'ensemble de cylindres (61) comprend un cylindre à double effet (120, 220) qui comporte la première chambre de levage (94) et la deuxième chambre de levage (96).

9. Ensemble d'essieu oscillant selon l'une quelconque des revendications précédentes, comprenant en outre un accumulateur de pression (102) qui s'accouple à la conduite de fluide (70), dans lequel l'accumulateur de pression (102) est de préférence accouplé hydrauliquement en permanence à la conduite de fluide (70) pour l'équilibrage de pression.

10. Ensemble d'essieu oscillant selon la revendication 8 ou 9, dans lequel l'accumulateur de pression (102) présente une précontrainte initiale, dans lequel un raccord de contrôle (104) est de préférence prévu, par le biais duquel, si nécessaire, une mesure de pression ou une recharge a lieu.

11. Ensemble d'essieu oscillant selon l'une quelconque des revendications précédentes, dans lequel la première chambre de levage (94) et la deuxième chambre de levage (96) sont reliées hydrauliquement l'une à l'autre dans un état oscillant de l'essieu oscillant (40).

12. Ensemble d'essieu oscillant selon l'une quelconque des revendications précédentes, dans lequel, dans un état de blocage de l'essieu oscillant (40), la première soupape de commande (66) est ouverte en direction de la première chambre de levage (94) et la deuxième soupape de commande (68) est ouverte en direction de la deuxième chambre de levage (96) et ces soupapes sont bloquées en sens inverse au sens d'ouverture.

13. Ensemble d'essieu oscillant selon l'une quelconque des revendications précédentes, dans lequel l'essieu oscillant (40) est réalisé sous forme d'essieu oscillant rigide (40) et est reçu de manière pivotante sur un châssis (12, 32) de la machine de travail (10, 30).

14. Machine de travail mobile (10, 30) comprenant un train roulant qui comprend au moins un ensemble d'essieu oscillant comprenant un dispositif de blocage (60) selon l'une quelconque des revendications 1 à 13 pour l'activation de l'essieu oscillant (40), dans laquelle l'essieu oscillant (40) est réalisé de préférence sous forme d'essieu oscillant rigide (40) et est reçu de manière pivotante sur un châssis (12, 32) de la machine de travail (10, 30), l'ensemble de cylindres (61) s'étendant entre une partie supérieure (42) associée au châssis (12, 32) et une partie inférieure (44) de l'essieu oscillant (40), et dans laquelle la partie supérieure (42) et la partie inférieure (44) sont pivotantes l'une par rapport à l'autre dans un état oscillant.

15. Machine de travail (10, 30) selon la revendication 14, comprenant en outre une hydraulique de bord, dans laquelle le dispositif de blocage (60) est réalisé sous forme de dispositif de blocage électrohydraulique et est réalisé hydrauliquement indépendamment de l'hydraulique de bord (36) de la machine de travail (10, 30).
